# EUROPEAN PATENT APPLICATION

(11) **EP 4 708 165 A1**
(43) Date of publication of application: **11.03.2026**
(21) Application number: 24382965.2
(22) Date of filing: 10.09.2024
(51) Int. Cl.: G06Q 10/08

(54) **SYSTEM AND METHOD FOR MANAGING THE TRANSPORT OF GOODS**

(71) Applicant: Siemens Rail Automation S.A.U., 28760 Tres Cantos (Madrid) (ES)
(72) Inventor: Garcia Serrano Gonzalez, Juan Manuel, 45005 TOLEDO (ES)
(74) Representative: Siemens Patent Attorneys

(57) **Abstract**

The invention relates to a system (100) and a method (200) for managing a transport of goods (130,131) from a position of origin (A₁) to a position of destination (A_{N}), said system (100) comprising:
- a central management system (110) configured for determining a first route plan according to which said goods (130,131) have to be transported from said origin position (A₁) to said destination position (A_{N});
- at least one tracker (120, 121) configured for monitoring or measuring, in real time, during the transport of said goods (130,131) from said position of origin to said position of destination, a current value of a transport condition for said goods, and for remotely providing to said central management system (110), in real time, said current value and a current position of the tracker (120, 121);
the system (100) being characterized in that its central management system (110) is configured for determining, during the transport of said goods from the origin position to the destination position, whether a target value for the transport condition is going to be met or not for a next one of said successive positions, and, in the negative, for automatically adapting said first route by calculating a diverging position (Aᵢ) on said first route and determining a second route plan replacing the first route plan from said diverging position (Aᵢ) until said destination position (A_{N}) and according to which said goods have to be transported until said destination position (A_{N}).

## Description

### Technical Field

The present invention is related to the transport of goods and the need of ensuring transport conditions that satisfy predefined criteria. In particular, the present invention concerns the tracking and monitoring of goods during their transport from a position of origin to a position of destination.

### Background Art

For valuable or special goods, a monitoring of their transport conditions enables to check whether prerequisite conditions of transport have been satisfied during a whole journey, starting from a position of origin, wherein said goods are loaded in or on a first transport vehicle (e.g. a cargo ship, a freight train, a truck, a plane, etc.), until a destination position, wherein said goods are unloaded from a last vehicle (e.g. another or the same cargo ship, freight train, truck, plane, etc.). In particular, local sensors might be installed on said goods, or in a vehicle transporting said goods, and routinary manual inspections enable to check whether the transport conditions are satisfied. However, such control is cumbersome and human error may occur. This leads to develop new systems and method, using notably intelligent trackers that enable to geographically track said goods and monitor their transport conditions, like temperature. This enables to ensure that the transport of said goods has been compliant with predefined transport conditions which aim for instance to guarantee a certain quality of the transported goods at their destination. However, despite such a monitoring and tracking, it may happen that, at some time point during the journey, the transport conditions have not been satisfied, which is usually noticed too late, affecting for instance therefore the quality of said goods.

There is therefore still a need for a system and method for managing the transport of goods that are able to optimize their transport with respect to the transport conditions that have to be met for said goods.

### Summary of Invention

An objective of the present invention is to propose a method and a system for managing the transport of goods during a trip from a position of origin to a position of destination, that ensure that said transport satisfies predefined or prerequisite transport conditions or criteria throughout the whole trip.

This objective is achieved by the measures taken in accordance with the independent claims. Further advantageous embodiments are proposed by the dependent claims.

More precisely, the present invention concerns a system for managing a transport of goods from a position of origin to a position of destination, said system comprising:
- a central management system configured for determining a first route plan according to which said goods have to be transported from said origin position to said destination position, wherein said first route plan defines (i) a first itinerary or route as a succession of positions (called hereafter the "successive positions") through which said goods have to pass, said succession of positions starting from said origin position, ending at said destination position, and comprising, in between, a succession of intermediate positions through which said first route passes, and, (ii) a first schedule defining for each position of said succession of positions (i.e. for said origin position, said destination position, and each of said intermediate positions located between said origin position and said destination position), a corresponding time indicating the time at which it is expected that said goods are located at said position during their transport from the origin position to the destination position, said central management system being further configured for storing at least one target value for a transport condition defined for said goods, wherein each transport condition is related to a measurable physical quantity that can be assessed or measured during the transport of said goods, and wherein said target value of the transport condition has to be satisfied during the transport of the goods from said origin position to said destination position; and;
- at least one tracker, e.g. a GPS tracker, configured for monitoring or measuring, in real time during the transport of said goods from said position of origin to said position of destination, a current value of said transport condition for said goods, and for remotely providing to said central management system, in real time, said current value and a current position of the tracker;
the system being characterized in that its central management system is configured for:
- determining, during the transport of said goods from the origin position to the destination position, and preferentially from
   ∘ said current value and current position provided by each tracker in function of the time,
   ∘ said target value of the transport condition,
   ∘ data related to an event capable of impacting said transport condition, and
   ∘ said first route plan,
   whether the target value defined for the transport condition is going to be met or not for a next one of said successive positions, and, in the negative, for automatically adapting said first route by calculating a diverging position on said first route and determining a second route plan replacing the first route plan from said diverging position until said destination position and according to which said goods have to be transported until said destination position, wherein the transport of said goods according to said second route plan is configured for satisfying said target value defined for the transport condition;
- automatically dispatching said second route plan to any means of transport, i.e. any transport vehicle, involved in the transport of said goods from said diverging position to said destination position.

The present invention concerns also a method for managing a transport of goods from a position of origin to a position of destination, the method comprising:
- storing, by a central management system, at least one target value for a transport condition defined for said goods, wherein each transport condition is related to a measurable physical quantity that can be assessed or measured during the transport of said goods, and wherein said target value of the transport condition has to be satisfied during the transport of the goods from said origin position to said destination position;
- determining, by said central management system, a first route plan according to which said goods have to be transported from said origin position to said destination position, wherein said first route plan defines (i) a first itinerary or route as a succession of positions through which said goods have to pass, said succession of positions starting from said origin position, ending at said destination position, and comprising, in between, a succession of intermediate positions through which said first route passes, and (ii) a first schedule defining for each position of said succession of positions, a corresponding time indicating the time at which said goods are expected to be located at said position during their transport from the origin position to the destination position;
- dispatching said first route plan to any transport vehicle involved in the transport of said goods according to said first route plan;
- during the transport of said goods from said position of origin to said position of destination, monitoring or measuring, by at least one tracker and in real time a current value of said transport condition of said goods, and remotely sending, by said at least one tracker and to said central management system, in real time, said current value and a current position of the tracker;
the method being characterized in that it comprises:
- determining, by its central management system, during the transport of said goods from the origin position to the destination position, and preferentially
   - from said current value and current position provided by each tracker in function of the time,
   - from said target value of the transport condition,
   - from data related to an event capable of impacting said transport condition, and
   - from said first route plan,
   whether the target value for the transport condition is going to be met or not for a next one of said successive positions with respect to the current position, and, in the negative, automatically adapting said first route by calculating a diverging position on said first route and determining a second route plan replacing the first route plan from said diverging position until said destination position and according to which said goods have to be transported until said destination position, wherein the transport of said goods according to said second route plan is configured for satisfying said target value for the transport condition, the method further comprising automatically dispatching said second route plan to any means of transport involved in the transport of said goods from said diverging position to said destination position.

### Description of Embodiments

According to the present invention, a transport condition that has to be satisfied during the transport of the goods from an origin position to a destination position might be verified in real time, notably continuously or periodically, all along the route from said origin position to said destination position, and actions might be taken pro-actively if the central management system expects that at a next position within said route, said transport condition will not be satisfied. Said actions comprise said determination of the second route plan and the dispatching of said second route plan to said means of transport involved in the transport of the goods, wherein, at the reception of said second route plan, any of said means of transport is configured for implementing said second route plan. Typically, the central management system comprises communication means for communicating with the different transport means involved in the transport of said goods, in order to be able to send said second route plan to said means of transport.

In particular, said second route plan may define a new schedule, or a new schedule and a new itinerary. For instance, if the central management system determines that no other route (i.e. neither the first route, nor alternative routes) would enable to satisfy said transport condition, notably according to current data related to an event, then the same route as defined by the first route plan might be kept, but according to a new schedule which will for instance take into account a weather forecast. Alternatively, the second route plan may comprise a completely or partially different route and a corresponding schedule, involving for instance, from said diverging position, other means of transport than the ones which were planned in the first route plan.

Preferentially, said central management system is configured for storing a main algorithm, wherein said main algorithm is configured for using as input said current value in function of the time, said current position in function of the time, said target value for the transport condition, said event data, and said first route plan, for automatically determining whether said target value of the transport condition is going to be met or not for said next one of the successive positions, and, in the negative, for automatically determining said diverging position and said second route plan.

In particular, said main algorithm might use a trained algorithm - called hereafter Transport Condition Evaluation algorithm or simply TCE algorithm, which has been trained by using as training input:
- a set of routes from a position of origin A to a position of destination B, each route comprising a set of intermediate positions, said set of routes representing the different routes (i.e. alternative routes) that can be followed by the goods when transported from origin position A to destination position B;
- a starting time, which represents typically the time at which the journey will start for said goods at the origin position A, and optionally, a constraint regarding an arrival time at said destination position;
- event data, e.g. meteorological data (e.g. temperature and/or humidity), along each route of said set, said event data comprising typically for one or several positions along each route (e.g. for said intermediate positions), a temporal evolution of a parameter (e.g. a temporal evolution of the temperature), in other words, values of said parameter in function of the time, for instance forecasted values of said parameter;
- optionally, packaging information regarding the goods (e.g. insulation information), wherein said packaging information enables to determine for instance an effect of said packaging on the value of said transport condition defined for the goods. For instance, said packaging information might comprise a heat transfer coefficient which will enable to determine a value of the goods temperature in function of a temperature surrounding said goods (e.g. surrounding the transport vehicle);
- a transportation speed;
and as training output:
- for each route of said set, values of said transport condition along each route.
Preferably, the training output comprises, for each successive position of each route, a value of the transport condition at said successive position that represents the value of the transport condition at the time the goods will be located at the concerned successive position when starting the journey at said starting time. In particular, the training output may comprise, for each position of each route of said set (i.e. for the origin, destination, and intermediate positions), values of said transport condition at said position at the time the goods will be located at said position when starting the journey at said starting time.

The training input and output might have been acquired experimentally during previous trips between different origin positions and different destination positions, by collecting event data that were relevant for said trips and transport condition values that were acquired during said trips. Data augmentation might be used for increasing synthetically the size of the training input and output.

Thanks to said training of the TCE algorithm, the main algorithm is able to determine which route will respect the transport condition until arrival of the goods at the destination. Typically, during the transport of said goods, the main algorithm will continuously receive, preferentially in real time, said event data (e.g. current ambient temperature at the different positions along the current route and forecasted temperature at said different positions), information about the current route (i.e. current position of the goods, current speed calculated for instance from the position of the goods in function of the time or directly provided by the transport means), optionally packaging information about the goods (e.g. heat transfer coefficient) and automatically determine, for each next position along the currently defined route, a value of said transport condition at the time the goods will reach said position. If one of the transport condition values in a next position (with respect to a current position) does not meet said target value, e.g. differs from said target value, then the main algorithm will automatically a diverging position and from said diverging position, alternative routes (typically multimodal routes), which preferentially satisfy a predefined constraint with respect to the delivery of the goods at the destination position (e.g. a temporal constraint). The diverging position might be one of said successive positions that is a next position with respect to the current position. The main algorithm further automatically determines, for each alternative route, a corresponding alternative schedule from the so-called diverging position. Then, said alternative routes and their respective schedules might be used by the main algorithm for feeding the TCE algorithm, which will determine, for each alternative route, values of said transport condition along said alternative route. In particular, the schedule might be used for determining the starting time at said diverging position. Then, the main algorithm will automatically select, among all alternative routes that respect the target value of the transport condition, the more appropriate route with respect to said transport condition (e.g. the fastest route, or the shortest route, or the route which is associated to transport condition values which are the more stable, or the farthest from boundary values of a range of target values, etc.) and create said second route plan which comprises then the selected alternative route (which represents the so-called new itinerary) and its corresponding alternative schedule (which represents the so-called new schedule). If none of the alternative routes meets the target value assigned to said transport condition, then the main algorithm may change the schedule of each route, namely of the first route and of each of said alternative routes, and run again the TCE algorithm on all said routes with their respective new schedule to determine which one is the most appropriate one. This enables the system according to the invention to automatically determine said second route plan.

The event data according to the invention are data of an event that can impact said transport condition value during the journey of the goods from the origin position to the destination position. It can be for instance environmental event data like meteorological data (e.g. snow data, or rain data, or wind data, or temperature data, or humidity data, or flood data), but also transport means traffic perturbation data, or other kind of data which may impact the value of said transport condition during the journey from a current position to the destination position. For instance, transport means traffic perturbation data may impact said transport condition by delaying the arrival at the destination position, which might be for instance of crucial importance for goods which would have to be maintained at a given temperature, and wherein said given temperature can only be maintained during a predefined period of time, said delay making the total time of the journey from the origin position to the destination position exceeding said predefined period of time. Said event data may comprise current data (e.g. real time temperature data measured at a given position, or real time traffic information at said given position, etc.) as well as forecasted event data (e.g. forecasted temperature for said given position, or forecasted traffic perturbation, etc.). The forecasted event data preferentially provide at least information related to said event (e.g. a meteorological event) for a position or area, and for a time or temporal window that are relevant with respect to the currently defined route, which means that according to the current schedule (e.g. according to said first schedule or said second schedule), said goods will be located at said position or within said area at said time or within said temporal window. Typically, the forecasted event data provides information about said event (e.g. with respect to temperature event) for one or several next positions and for the time at which it is currently expected that said next position(s) will be reached according to the current schedule.

The target value of the transport condition is for instance a value that shall not be exceeded (e.g. a maximal temperature) during the transport of the goods. The central management system may store several target values, for instance a range of target values within which the value of the transport condition has to be kept during the whole transport of the goods, from the origin position to the destination position. Of course, the central management system may comprise for each of said goods, a set of transport conditions that have to be satisfied during the transport, for instance, a maximal humidity, a range of temperatures, etc., and for each transport condition, one or several target values might be stored. In particular, one or several trackers might be in charge of acquiring or measuring, during the transport of the goods, the current value of each transport condition. Different trackers might monitor different or the same transport condition. The tracker according to the invention is preferentially configured for determining its own position. It is for instance a GPS tracked. This enables to geolocate the goods during their trip to the destination position. Alternatively, the tracker may acquire position data from the vehicle that transports the goods. The position data that is acquired or determined by the tracker, i.e. its current position, is then sent, notably in real time, to the central management system, together with the value of the transport condition it is monitoring. This enables the central management system to determine in real time the position of the goods and an associated value of the transport condition. For instance, a first tracker may monitor the temperature in real time, another or the same tracker may also monitor the humidity in real time, and at least one tracker provides to the central management, in addition to the transport condition it is measuring or monitoring, its position or the position of the transport vehicle (in the following, no distinction will be made between the position of the tracker and the position of the transport vehicle acquired by the tracker: they are considered equivalent given that both enable to locate the goods in function of the time). Said tracker might be installed on the goods, or in a box containing said goods, or in any closed or open space comprising said goods. In particular, the main algorithm may determine said effect of said packaging on the value of said transport condition defined for the goods by comparing for instance a current value provided in real time by a tracker, e.g. the temperature in a box comprising goods, and the temperature received in real time from said event data, e.g. the temperature outside the transport vehicle.

According to the present invention, the central management system is preferentially configured for managing multimodal transport, and is therefore notably configured for planning multimodal transport for said goods. In other words, the transport of said goods from the origin position to the destination position may involve a cargo ship, a freight train, a truck, a transport van, a car, a plane, etc. For instance, the system according to the invention may comprise one or several goods transport means, said system being configured for controlling a motion of one or several of said goods transport means according to said first route plan, and, in said negative, according to said second route plan. Preferentially, the transport means involved in said transport comprise at least railway transport means, e.g. one or several trains, configured for moving on a railway network, and wherein said first route comprises a first railway route on said railway network, and wherein said second route comprises a second railway route on said railway network. In particular, the central management system might be configured for controlling a routing of railway transport means on said railway network. Typically, said central management system may automatically adapt the first route by determining said second route or another schedule if it determines that the target value for the transport condition, in particular that at least one target value of any of the transport conditions, will not be respected when keeping the current first route plan. For this purpose, the central management system may control wayside control systems of the railway network for automatically adapting the first route plan and implementing the second route plan.

The transport condition according to the present invention might be at least one of the following or a combination of the following transport conditions:
- a humidity condition;
- a temperature condition;
- a pressure condition;
- an acceleration condition;
- a travel time condition;
- a solar radiation;
- a wind speed;
- a cloudiness measurement;
- visibility conditions.

Values of said transport condition are acquired or measured in real time by the tracker, notably continuously or periodically, and remotely sent to the central management system which can monitor said values of the transport condition(s) in function of the time. In particular, if the target value of each transport condition is going to be met for a next one of said successive positions during the transport of the goods from the origin position to the destination position and with respect to a current position wherein said goods are located, then the central management system is preferably configured for maintaining said transport of the goods along said first route according to said first schedule. However, the central management system preferentially continuously checks whether each target value is respected during the transport of the goods along said first route, and, if needed, automatically adapts said first route plan.

### Brief Description of the Drawing

Further aspects of the present invention will be better understood through the following drawings, wherein like numbers designate like objects:
- Fig. 1: schematic illustration of a preferred embodiment of a system according to the invention.
- Fig. 2: flowchart of a preferred embodiment of a method according to the invention.

### Description of Examples

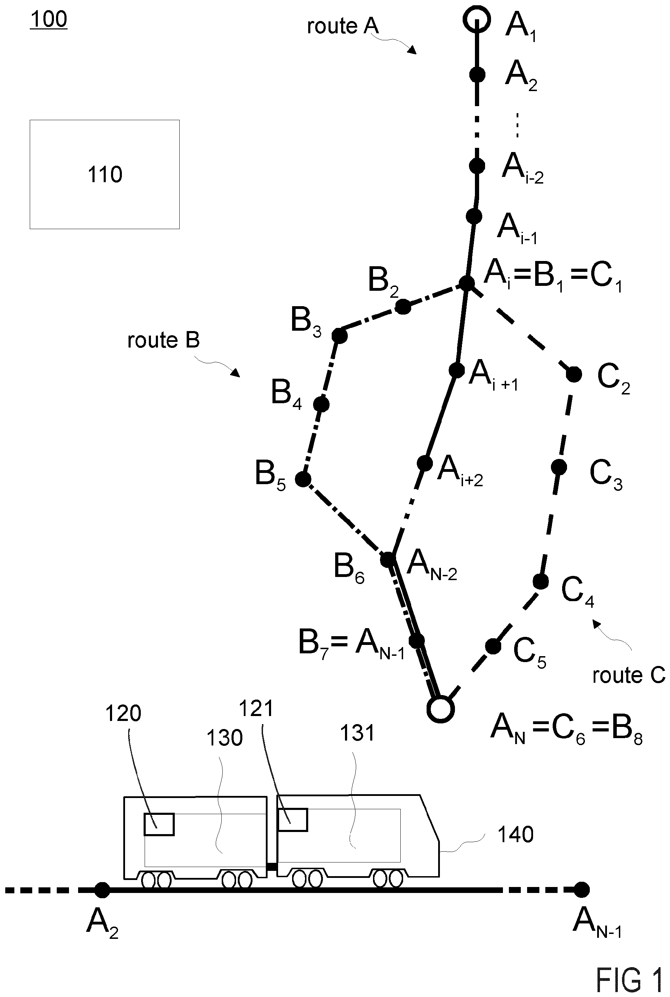

A preferred embodiment of a system 100 according to the invention is illustrated in Figure 1. Said system 100 comprises a central management system 110 and one or several trackers 120, 121. The central management system 110 is configured for determining a first route plan according to which goods 130, 131 have to be transported from an origin position A₁ to a destination position A_{N} by one or several vehicles of transport, like a train 140. The one or several trackers 120, 121 are configured for monitoring or measuring, during the transport of said goods 130, 131 from said origin position A₁ to said destination position A_{N}, a current value of a transport condition that has to be satisfied during the transport of said goods 130, 131, and a current position of said goods, typically provided by the current position of the tracker or of the transport vehicle. Said current value is preferentially measured or monitored by said tracker(s) 120, 121 in real time, in particular continuously or periodically. Each tracker 120, 121 is configured for communicating with the central management system 110 for providing to the latter, and notably in real time, the monitored or measured values of the transport condition(s) and said current position. In particular, the central management system 110 receives in real time the measured or monitored or acquired values, and can monitor the latter as well as the goods position in function of the time. Each tracker may measure, monitor, or acquire values for one or several transport conditions (e.g. current condition of humidity, temperature, pressure, etc.), and send said values to the central management system 110. Additionally, and preferentially, at least one of the trackers sends, to the central management system, in real time, its current position, so that the central management system 110 is aware of the position of the goods in function of the time with respect to said first route.

The goods 130 according to the invention are for instance products or material that have to be transported at said destination position A_{N}. It can be food, machines, chemical compounds, etc., for which at least one transport condition (e.g. temperature, pressure, humidity, ...) has to be ensured during the trip to said destination position A_{N}. Said trip corresponds to the so-called first route that is preferentially automatically determined by the central management system 110. In particular, for determining said first route, the central management system 110 may feed said main algorithm with the origin position, the destination position, a starting time (e.g. a day and hour) at which the transport will start, optionally a time at which said goods should reach the destination position at the latest, the main algorithm generating then a set of routes for reaching the destination from the origin position, wherein each route might combine one or several transport means (e.g. truck, then train, and then truck). It may then automatically select one of these routes, using for instance said set of routes as input to the TCE algorithm, together with the starting time, event data, transportation speed, the TCE algorithm outputting for each route of the set, the values of the transport condition along the route, and the main algorithm choosing then the one that satisfies the target value defined for said transport condition. If several routes satisfy said target value, then the main algorithm may select the one that satisfies said target value defined for said transport condition and another optional criterion, e.g. the fastest route. An example of a first route is illustrated by the route A = A₁,..., A_{N} in Fig. 1, which starts at the origin position A₁ and ends at the destination position A_{N}, and comprises in between a succession of intermediate positions A₂-A_{N-1}. The successive positions A₁,..., A_{N} represent the route that will be followed by said goods for reaching the destination position. The central management system 110 is preferentially configured for implementing a multimodal transport along said first route, wherein for instance, a truck will be used for transporting the goods from the origin position A₁ to an intermediate position A₂, then a train 140 will be used for transporting said goods from A₂ to A_{N-1}, and finally another truck will transport the goods from A_{N-1} to A_{N}. Typically, according to the present invention, the first route and/or the second route are multimodal routes. A first schedule is also determined by the central management system 110 and associated to said first route, indicating notably at which time each successive position will be reached by the goods when starting the trip at said starting time at the origin position A₁. The first route and the first schedule form the so-called first route plan.

Preferentially, the central management system 110 comprises a database associating to each transport condition one or several target values. For instance, for different types of goods, said database may provide a set of transport conditions that have to be monitored during the transport of said goods, and the associated target values that have to be satisfied. Then, during the transport of said goods along the first route, the central management system 110 is configured for determining whether the target value(s) of the transport condition(s) will all be satisfied or not from transport condition values predicted by the TCE algorithm for said transport condition at each next successive position along the remaining portion of the first route that remains when considering a current position. For this, the central management system preferably continuously feeds the TCE algorithm with the portion of said first route that remains ahead until reaching the destination position, said portion starting at a next one of said successive positions with respect to a current position of the goods, a starting time corresponding to the time at which the good will be at said next successive position, event data along the remaining portion of the first route (e.g. temperature at each next intermediate position that is planned for the time at which said goods will reach said next intermediate position), the transportation speed (used notably for estimating the arrival time of the goods at each next intermediate position), and the TCE algorithm outputting said predicted values of the transport condition for each next successive position along said remaining portion of the first route. Preferentially, if at least one of said target value will not be satisfied in the remaining portion of the first route, then the central management system 110 automatically adapts the first route plan by calculating said diverging position and said second route plan to be carried out from said diverging position.

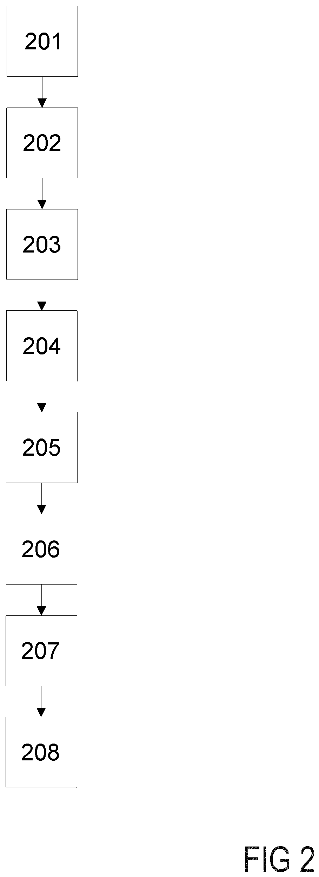

In connection with Figure 2, a preferred embodiment of the method according to the invention for managing a transport of goods from a position of origin to a position of destination will be described in more detail hereafter.

At step 201, the central management system 110 stores, notably in its database, at least one target value for a transport condition defined for said goods. For instance, a set of transport conditions and, for each transport condition, one or several target values might be provided to the system 100 by an operator, or might be acquired by the central management system 110 from an information file related to the goods to be transported.

At step 202, the central management system 110 determines said first route plan according to which said goods have to be transported from said origin position A₁ to said destination position A_{N}. The first route plan defines a first itinerary which corresponds to the first route A comprising the successive positions A₁,...,A_{N}, and a first schedule which indicates the time at which said goods are expected to be located at each of said positions during the transport of said goods from the origin position A₁ to the destination position A_{N}. As already mentioned and preferentially, said first route might be determined by the central management system 110 via its main algorithm, notably by running the TCE algorithm of said main algorithm. Alternatively, said first route might be determined by the central management system by calculating the fastest route enabling to reach the destination position, without taking into account whether, for said first route, the target value(s) will be met, given that, if it is not the case, the central management system will automatically determine a second route plan as explained afterwards.

At step 203, the central management system 110 dispatches said first route plan to any transport vehicle involved in the transport of said goods according to the first route plan. It can for instance send this first route plan to a train control system, to a truck management system, etc., so that the transport of said goods be carried out according to said first route plan.

At step 204, during the transport of said goods from said position of origin A₁ to said destination position A_{N}, one or several trackers 120, 121 of the system 100 monitor, e.g. measure or acquire, current values for each transport condition that has been defined for said goods 130, 131, tracking therefore the temporal evolution of the value of said transport condition during the transport of said goods. The monitored values are then transmitted to the central management system 110.

At step 205, during the transport of said goods from said position of origin A₁ to said destination position A_{N}, the central management system 110 determines whether each target value that has been associated to a transport condition is going to be met or not for a next one of the successive positions with respect to a current position, i.e. for a next position that will be reached by the goods when moving along said first route. Typically, the central management system 110 is configured for determining whether each of said target values will be satisfied for a predefined set of next positions. Said set, more precisely its size, depends for instance on the speed of the transport vehicle and, optionally, on the position of potential diverging positions that enable to change the current route for implementing the second route. In order to determine if a target value will be satisfied or not at a next position, the central management system is preferably configured for inputting to said main algorithm the current value of each transport condition and the current position of the goods provided by at least one of the trackers, each target value of the transport condition, data related to an event capable of impacting said transport condition at said next position(s) with respect to the time of arrival of the goods at the concerned next position, and said first route plan, the main algorithm outputting, via its TCE algorithm and for each of said next positions, the value of each transport condition at said next position at the time at which said goods will reach said next position.

At step 206, if, for each of said next positions, the outputted value of each transport condition satisfies the target value defined for said transport condition, then no action is taken by the central management system 110 which simply maintains said transport of the goods along said first route according to said first schedule plan.

However, in the negative, notably if the value of at least one transport condition that has been outputted by the main algorithm for a next position along said first route does not satisfy the target value defined for said transport condition, then the central management system 110 automatically adapts said first route at step 207. For this purpose, it calculates a diverging position on said first route, said diverging position being preferentially one of said next positions, and determines also a second route plan that is going to replace the first route plan from said diverging position until said destination position. Preferentially, the diverging position is a next position that is located, along the first route and with respect to the direction of travel, directly before another next position that is the first one for which the target value is not satisfied. This enables to keep the first route as long as possible, given that some transport conditions could change again (e.g. change of the ambient temperature) and would not require to adapt the first route anymore. In any case, the diverging position is a position that will be reached by the transported goods after a current position at which the calculation of said diverging position has been launched by the central management system. For instance, the central management system 110 may determine, when the goods are located at the intermediate position Aᵢ₋₂ or Aᵢ₋₁, that at the next position Aᵢ₊₁, the target value for one of the transport conditions of said goods will not be met anymore. Then the central management system 110 determines a diverging position Aᵢ, that is preferentially a next position located before the next position at which the target value is not met anymore, and calculates alternative routes from said diverging position Aᵢ. Such alternative routes are schematically illustrated in Figure 1 by the route B = B₁,...,B₈, and the route C = C₁,...,C₆. The main algorithm will then determine which alternative route satisfies all target values that have been defined for the transport conditions associated to said goods, and will select said route satisfying all target values, or the best route if there are several alternative routes satisfying all target values. Additional criteria might be applied for selecting the best route, like the route being the fastest, or the shortest, etc. The main algorithm further determines a corresponding schedule for the selected alternative route, and creates the so-called second route plan which comprises the selected alternative route and its corresponding schedule.

At step 208, the central management system 110 automatically dispatches or sends said second route plan to any means of transport involved in the transport of said goods from said diverging position Aᵢ to said destination position A_{N}. The transport means are then configured for implementing the received second route plan. For instance, if the route B is selected, then the train 140 which was transporting said goods may receive an order for the central management system to stop at the diverging position, corresponding for instance to a station, wherein the goods 130, 131, will be for instance transferred on a truck, which will transport said goods to the position B₆ by following the route B. Then, at the position B₆, they will be transferred back on another train for being transported until position B₇, at which position they will be transferred back on a truck for being transported to the destination position B₈. This enables for instance to avoid the transport of the goods through a region crossed by the portion Aᵢ₊₁,...,A_{N-2} of the first route, wherein it would not have been possible to ensure keeping the value of each transport condition within a respective range of target values for instance.

During the transport of the goods, the central management system 110 is notably configured for continuously checking whether all target values will be satisfied when continuing along a currently defined route, and for adapting the currently defined route each time necessary, i.e. each time a target value will not be met anymore according to the values outputted by the main algorithm for the remaining portion of the current route.

To conclude, the present invention proposes a new method and system for managing the transport of goods, that enable to actively adapt the multimodal route along which the goods are transported in function of an evolution of a transport condition value determined for a next position of said goods along said multimodal route, in order to continuously satisfy a target value defined for said transport condition.

## Claims

1. System (100) for managing a transport of goods (130,131) from a position of origin (A₁) to a position of destination (A_{N}), said system (100) comprising:
- a central management system (110) configured for determining a first route plan according to which said goods (130,131) have to be transported from said origin position (A₁) to said destination position (A_{N}), wherein said first route plan defines i) a first route as a succession of positions (A₁,...,A_{N}) through which said goods (130,131) have to pass, said succession of positions starting from said origin position (A₁), ending at said destination position (A_{N}), and comprising, in between, a succession of intermediate positions through which said first route passes, and, ii) a first schedule defining for each position of said succession of positions (A₁,...,A_{N}), a corresponding time indicating the time at which it is expected that said goods (130,131) are located at said position during their transport from the origin position (A₁) to the destination position (A_{N}), said central management system (110) being configured for storing at least one target value for a transport condition defined for said goods (130,131) and that has to be satisfied during the transport of the goods (130,131) from said origin position (A₁) to said destination position (A_{N});
- at least one tracker (120, 121) configured for monitoring or measuring, in real time, during the transport of said goods (130,131) from said position of origin to said position of destination, a current value of said transport condition for said goods, and for remotely sending to said central management system (110), in real time, said current value and a current position of the tracker (120, 121);
the system (100) being **characterized in that** its central management system (110) is configured for determining, during the transport of said goods from the origin position to the destination position, whether the target value for the transport condition is going to be met or not for a next one of said successive positions, and, in the negative, for automatically adapting said first route by calculating a diverging position (Aᵢ) on said first route and determining a second route plan replacing the first route plan from said diverging position (Aᵢ) until said destination position (A_{N}) and according to which said goods have to be transported until said destination position (A_{N}), wherein the transport of said goods according to said second route plan is configured for satisfying said target value for the transport condition, the central management system (110) being configured for automatically dispatching said second route plan to any means of transport involved in the transport of said goods from said diverging position (Aᵢ) to said destination position.

2. System (100) according to claim 1, wherein said second route plan defines a new schedule, or a new schedule and a new itinerary.

3. System (100) according to claim 1 or 2, wherein the central management system (110) is configured for using a main algorithm for determining whether the target value for the transport condition is going to be met or not, said main algorithm using as input
- said current value and current position provided by each tracker in function of the time,
- said target value of the transport condition,
- data related to an event capable of impacting said transport condition, and
- from said first route plan.
and, in the negative, said main algorithm being configured for automatically determining said diverging point and said second route plan.

4. System (100) according to claim 3, wherein said main algorithm uses a trained algorithm, which has been trained by using as training input:
- a set of routes from an origin position A to a destination position B;
- a starting time of the transport of the goods from said origin position;
- event data, e.g. meteorological data, along each route of said set;
- optionally, packaging information regarding the goods;
- a transportation speed;
and as training output:
- for each route of said set, values of said transport condition along each route.

5. System (100) according to one of the claims 1 to 4, wherein said central management system is configured for planning multimodal transport for said goods (130, 131).

6. System (100) according to one of the claims 1 to 5, wherein said transport means comprise at least railway transport means configured for moving on a railway network, and wherein said first route comprises a first railway route on said railway network, and wherein said second route comprises a second railway route on said railway network.

7. System (100) according to claim 6, wherein the central management system (110) is configured for controlling a routing of railway transport means on said railway network.

8. System (100) according to one of the claims 1 to 7, wherein said transport condition is at least one of the following or a combination of the following:
- a humidity condition;
- a temperature condition;
- a pressure condition;
- an acceleration condition;
- a travel time condition;
- a solar radiation;
- a wind speed;
- a cloudiness measurement;
- a visibility condition.

9. System (100) according to one of the claims 1 to 8, wherein said event data comprise environmental event data.

10. System (100) according to one of the claims 1 to 9, wherein, in the affirmative, the central management system is configured for maintaining said transport of the goods along said first route according to said first schedule.

11. System (100) according to one of the claims 1 to 10, comprising one or several goods transport vehicles, said system (100) being configured for controlling a motion of said transport vehicles according to said first route plan, and, in said negative, according to said second route plan.

12. Method (200) for managing a transport of goods (130, 131) from a position of origin (A₁) to a position of destination (A_{N}), the method (200) comprising:
- storing (201), by a central management system (110), at least one target value for a transport condition defined for said goods, wherein said target value of the transport condition has to be satisfied during the transport of the goods (130, 131) from said origin position to said destination position;
- determining (202), by said central management system (110), a first route plan according to which said goods have to be transported from said origin position (A₁) to said destination position (A_{N}), wherein said first route plan defines (i) a first route as a succession of positions (A₁,...,A_{N}) through which said goods have to pass, said succession of positions starting from said origin position (A₁), ending at said destination position (A_{N}), and comprising, in between, a succession of intermediate positions through which said first route passes, and (ii) a first schedule defining for each position of said succession of positions (A₁,...,A_{N}), a corresponding time indicating the time at which said goods are expected to be located at said position during their transport from the origin position to the destination position;
- dispatching (203) said first route plan to any transport vehicle involved in the transport of said goods according to said first route plan;
- during the transport of said goods from said position of origin (A₁) to said position of destination (A_{N}), monitoring or measuring (204), by at least one tracker (120, 121) and in real time, a current value of said transport condition of said goods (130, 131), and remotely providing, by said at least one tracker (120, 121) and to said central management system (110), in real time, said current value and a current position of the tracker;
the method (200) being **characterized in that** it comprises:
- determining (205), by its central management system (110), during the transport of said goods from the origin position to the destination position, whether the target value for the transport condition is going to be met or not for a next one of said successive positions, and, in the negative, automatically adapting (207) said first route by calculating a diverging position (Aᵢ) on said first route and determining a second route plan replacing the first route plan from said diverging position until said destination position and according to which said goods have to be transported until said destination position, wherein the transport of said goods according to said second route plan is configured for satisfying said target value for the transport condition, and
- automatically dispatching (208) said second route plan to any means of transport involved in the transport of said goods from said diverging position (Aᵢ) to said destination position.

13. Method (200) according to claim 12, wherein said second route plan defines a new schedule, or a new schedule and a new itinerary.

14. Method (200) according to claim 12 or 13, wherein said transport means comprise at least railway transport means configured for moving on a railway network, and wherein said first route comprises a first railway route on said railway network, and wherein said second route comprises a second railway route on said railway network.

15. Method (200) according to claim 14, comprising controlling a routing of railway transport means on said railway network.
